# EUROPÄISCHE PATENTSCHRIFT

(11) **EP 0 884 227 B1**
(45) Veröffentlichungstag und Bekanntmachung des Hinweises auf die Patenterteilung: **24.04.2002**
(21) Anmeldenummer: 98110064.7
(22) Anmeldetag: 03.06.1998
(51) Int. Cl.: B60R 22/46

(54) **Linearantrieb für einen Gurtstraffer**
Linear drive for a vehicle occupant restraint system
Entraînement linéaire pour un tendeur de ceinture de sécurité

(30) Priorität: 09.06.1997 DE 29710011 U
(43) Veröffentlichungstag der Anmeldung: 16.12.1998
(73) Patentinhaber: TRW Occupant Restraint Systems GmbH & Co. KG, 73551 Alfdorf (DE)
(72) Erfinder: Schmid, Johannes, 73527 Schwäbisch Gmünd (DE)
(74) Vertreter: Kitzhofer, Thomas, Dipl.-Ing.

(56) Entgegenhaltungen:
- DE-U- 29 520 307

## Beschreibung

Die Erfindung betrifft einen Linearantrieb für einen Gurtstraffer, mit einem Zylinderrohr, einem in diesem verschiebbar angeordneten Kolben, der einen hohlen Innenraum und an einem axialen Ende eine Stirnwand aufweist, die mit einer Durchgangsöffnung und auf der Seite des Innenraums des Kolbens einer Berstscheibe versehen ist, und einer pyrotechnischen Treibladung, die nach ihrer Zündung den Innenraum des Kolbens mit unter Druck stehendem Gas beaufschlagt.

Ein solcher Linearantrieb ist aus dem Gebrauchsmuster DE 295 20 307 bekannt. Im Bedarfsfall wird die Treibladung gezündet, so daß der Kolben unter der Wirkung des erzeugten Gases einen Straffhub ausführen kann, der von dem Gurtstraffer in eine Drehung einer Gurtspule eines Gurtaufrollers in der Aufwickelrichtung umgesetzt wird. Dadurch wird die sogenannte Gurtlose aus dem Gurtsystem herausgezogen, damit der Fahrzeuginsasse bei einem Unfall möglichst früh an der Fahrzeugverzögerung teilnimmt. Um zu gewährleisten, daß auch bei einer Zündung der Treibladung unter ungünstigsten Umständen, zum Beispiel bei Mißbrauch, Überhitzung durch Fahrzeugbrand oder wenn der Fahrzeuginsasse bereits eine Verlagerung nach vorne ausführt, keinerlei Gefährdung von der Treibladung und dem Linearantrieb ausgeht, sind die Durchgangsöffnung in der Stirnwand des Kolbens sowie die Berstscheibe vorgesehen. Die Berstscheibe gibt bei einem übermäßig hohen Druck im Innenraum des Kolbens die Durchgangsöffnung frei, so daß dieser Druck aus dem Innenraum des Kolbens entweichen kann und ein Bersten des Zylinderrohres verhindert ist, ohne daß dieses besonders kräftig ausgelegt sein muß.

Durch die Erfindung wird ein solcher Linearantrieb weitergebildet. Zu diesem Zweck ist vorgesehen, daß die Durchgangsöffnung eine Stufenbohrung mit einem ersten Abschnitt auf der dem Innenraum des Kolbens zugewandten Seite und einem zweiten Abschnitt auf der entgegengesetzten Seite ist, der einen kleineren Durchmesser als der erste Abschnitt hat, und daß die Berstscheibe am Rand des ersten Abschnittes der Stufenbohrung auf der Innenseite des Kolbens anliegt. Bei dieser Gestaltung ergeben sich große konstruktive Freiheiten. Durch die Auswahl des Durchmessers des ersten Abschnittes der Stufenbohrung läßt sich der Druckwert einstellen, bei dem die Berstscheibe bricht. Durch die Auswahl des Durchmessers des zweiten Abschnittes der Stufenbohrung läßt sich der Durchsatz durch die Stirnwand des Kolbens bei zerstörter Berstscheibe festlegen.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die anhand der Zeichnungen erläutert wird. In diesen zeigen:
- Figur 1 eine Explosionsansicht eines Gurtstraffers, der mit einem erfindungsgemäßen Linearantrieb versehen ist;
- Figur 2 in einer teilgeschnittenen Ansicht einen Linearantrieb gemäß dem Stand der Technik;
- Figur 3 in einer Schnittansicht ein Ende des Kolbens eines erfindungsgemäßen Linearantriebs; und
- Figur 4 in einer Schnittansicht einen Stopfen mit Berstscheibe, der bei dem erfindungsgemäßen Linearantrieb verwendet wird.

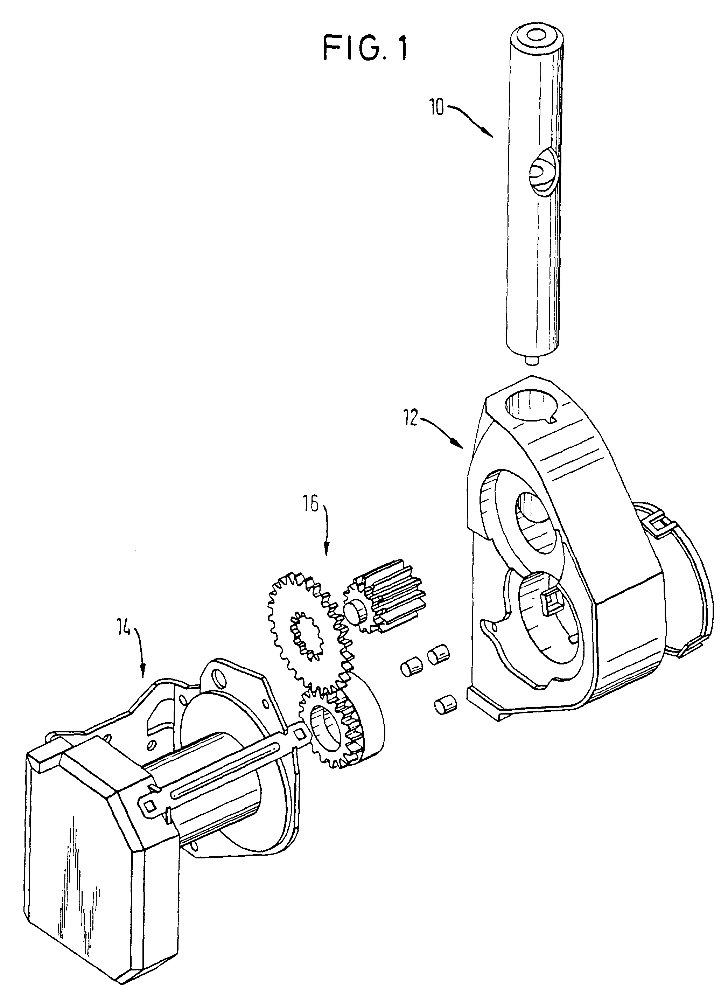

In Figur 1 sind in einer Explosionsansicht ein erfindungsgemäßer Linearantrieb 10 sowie ein zugehöriger Gurtstraffer 12 und ein Gurtaufroller 14 dargestellt, an welchem der Gurtstraffer 12 mittels eines Übersetzungsgetriebes 16 angreift.

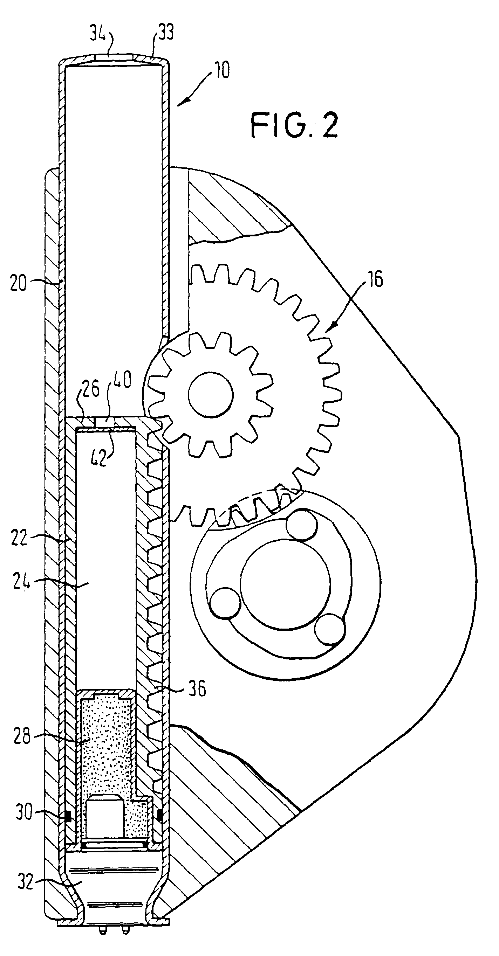

Wie in Figur 2 zu sehen ist, besteht der Linearantrieb 10 aus einem Zylinderrohr 20 und einem in diesem verschiebbar angeordneten Kolben 22. Der Kolben 22 weist einen hohlen Innenraum 24 auf, der an einem axialen Ende einer Stirnwand 26 und an dem entgegengesetzten axialen Ende eine pyrotechnische Treibladung 28 aufweist. Zwischen dem Zylinderrohr 20 und dem Kolben 22 ist an diesem ein Dichtring 30 angeordnet. An seinem bezüglich Figur 2 unteren Ende ist das Zylinderrohr 22 durch einen Verschlußstopfen 32 verschlossen, der auch die Zündkontakte für eine Zündung der Treibladung 28 trägt. An seinem entgegengesetzten Ende ist das Zylinderrohr 20 mit einer Kolbenfangsicherung 33 mit Öffnung 34 versehen. Die Öffnung 34 dient zur Entlüftung des Zylinderrohres 20 bei einem Straffhub des Kolbens 22.

Der Kolben 22 weist auf seiner Mantelfläche eine sich parallel zur Längsachse des Kolbens 22 erstreckende Verzahnung 36 auf, die mit einem Zahnrad des Getriebes 16 zusammenwirken kann, um einen Straffhub des Kolbens 22 in eine Rotationsbewegung umzusetzen, welche als eine Drehung in der Gurtbandaufwickelrichtung auf die Gurtspule des Gurtaufrollers 14 übertragen wird. Ein solcher Straffhub wird ausgelöst, indem die Treibladung 28 gezündet wird. Diese erzeugt ein unter Druck stehendes Gas, welches den Innenraum des Kolbens beaufschlagt und zu einer Verlagerung des Kolbens 22 im Zylinderrohr 20 führt.

Die Stirnwand 26 des Kolbens 22 weist eine sich in der Längsrichtung des Kolbens erstreckende Durchgangsöffnung 40 auf. An der Stirnwand ist auf der Seite des Innenraums eine Berstscheibe 42 angebracht, welche die Durchgangsöffnung 40 verschließt. Die Berstscheibe 42 gewährleistet, daß oberhalb eines vorbestimmten Gasdrucks im Innenraum 24 des Kolbens 22 die Durchgangsöffnung 40 freigegeben wird und der Druck aus dem Innenraum des Kolbens 22 entweichen kann. Auf diese Weise ist sichergestellt, daß auch bei einer Zündung der Treibladung im ungünstigsten Fall, beispielsweise bei in der Ausgangsstellung blockierten Kolben 22, kein übermäßig hoher Gasdruck im Inneren des Kolbens 22 entstehen kann, der zu einer Gefahr des Berstens des Linearantriebs führt. Die bis hier beschriebene Gestaltung ist aus dem deutschen Gebrauchsmuster 295 20 307 bekannt.

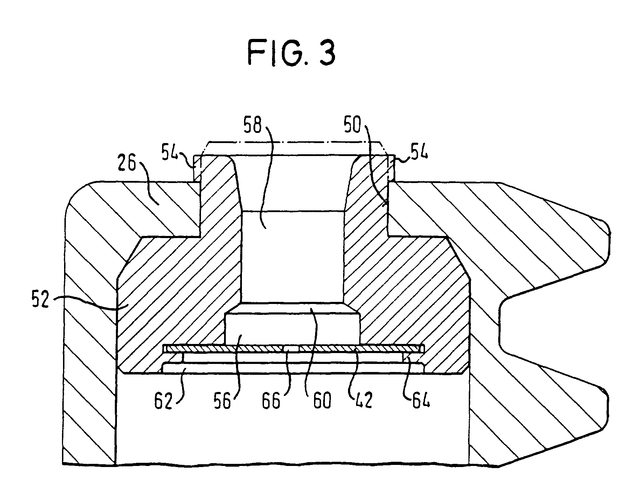

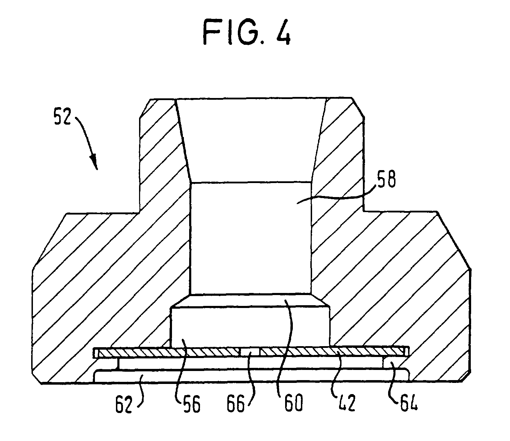

In den Figuren 3 und 4 ist die erfindungsgemäße Gestaltung der Stirnwand 26 dargestellt. Die Stirnwand 26 ist mit einer Aufnahme 50 versehen, in die ein Stopfen 52 eingesetzt ist. Dieser durchquert die Aufnahme 50 und ist auf der Außenseite des Kolbens umgebördelt, so daß lokale Materialvorsprünge 54 gebildet sind, welche den Stopfen 52 an der Stirnwand 26 halten.

Der Stopfen 52 weist die Durchgangsöffnung 40 auf, die mit einem ersten Abschnitt 56 und einem zweiten Abschnitt 58 gebildet ist. Der Durchmesser des ersten Abschnittes ist größer als der Durchmesser des zweiten Abschnittes. Zwischen dem ersten Abschnitt 56 und dem zweiten Abschnitt 58 der Stufenbohrung ist ein kegelstumpfförmiger Übergang 60 vorgesehen. Der zweite Abschnitt 58 der Stufenbohrung ist an seinem dem Außenraum zugewandten Ende kegelstumpfförmig erweitert.

Auf der dem Innenraum des Kolbens zugewandten Seite ist der Stopfen 52 mit einer Berstscheibenaufnahme 62 versehen, in der die Berstscheibe 42 so aufgenommen ist, daß sie auf der dem Innenraum zugewandten Seite der Stufenbohrung am Rand des ersten Abschnittes 56 anliegt. Der Randabschnitt der Berstscheibenaufnahme 62 ist punktuell umgebördelt, so daß die Berstscheibe von Materialvorsprüngen 64 in Anlage am Rand des ersten Abschnittes 56 der Stufenbohrung gehalten wird. Mittig ist die Berstscheibe mit einer Bohrung 66 versehen. Alternativ kann die Berstscheibe mit einem Zusatzteil verclipst sein.

Sowohl der Stopfen 52 als auch die Berstscheibe 42 sind jeweils rotationssymmetrisch. Die Berstscheibe hat eine Dicke von etwa 0,2 mm, und der Durchmesser der Bohrung 66 beträgt etwa 0,5 mm. Der Durchmesser des ersten Abschnittes der Stufenbohrung beträgt etwa 4 mm, und der Durchmesser des zweiten Abschnittes der Stufenbohrung beträgt etwa 3 mm. Die Länge der Stufenbohrung entlang ihrer Längsachse beträgt etwa 6 mm.

Durch das Vorsehen eines größeren Durchmessers an der Innenseite des Kolbens läßt sich erreichen, daß die Berstscheibe 42 über einen vergleichsweise großen Innenbereich nicht unterstützt ist, so daß sie bereits bei einem kleineren Innendruck im Kolben die Durchgangsöffnung 40 freigibt. Je nach der Art der verwendeten Berstscheibe zerbricht sie, wenn ein vorbestimmter Druck auf sie einwirkt, oder verformt sich zum Außenraum des Kolbens hin und rutscht unter den Materialvorsprüngen 64 der Bcrstscheibenaufnahme 62 heraus, so daß sie durch die Stufenbohrung hindurch aus dem Kolben ausgestoßen wird. Durch das Vorsehen eines kleineren Durchmessers zur Außenseite des Kolbens hin wird verhindert, daß nach einer Zerstörung der Berstscheibe 42 das von der Treibladung erzeugte Gas als Stoßwelle austritt; es strömt kontrolliert aus. Falls eine Berstscheibe verwendet wird, die verformt und als Ganzes aus der Berstscheibenaufnahme herausgetrieben wird, ist darauf zu achten, daß der zweite Abschnitt der Stufenbohrung einen ausreichenden Durchmesser für den Durchtritt der verformten Berstscheibe hat.

Für den Stopfen 52 wird ein Material verwendet, dessen Schmelzpunkt unterhalb der Selbstentzündungstemperatur der Treibladung 28 liegt. Auf diese Weise ist gewährleistet, daß beispielsweise bei einem Fahrzeugbrand, bei dem die Treibladung bis zu ihrer Selbstentzündungstemperatur erwärmt wird und zündet, bereits vor der Selbstzündung der Treibladung die Stirnwand 26 freigegeben wird, so daß der von der Treibladung erzeugte Gasdruck aus dem Linearantrieb entweichen kann, ohne daß es zu einer Betätigung des Kolbens 22 kommt. Die Selbstentzündungstemperatur der Treibladung liegt üblicherweise bei über 170°C, so daß als Material für den Stopfen 52 eine Zinn-Wismut-Legierung mit einem Schmelzpunkt von etwa 140°C bis etwa 160°C geeignet ist.

## Patentansprüche

1. Linearantrieb (10) für einen Gurtstraffer, mit einem Zylinderrohr (20), einem in diesem verschiebbar angeordneten Kolben (22), der einen hohlen Innenraum (24) und an einem axialen Ende eine Stirnwand (26) aufweist, die mit einer Durchgangsöffnung (40) und auf der Seite des Innenraums (24) des Kolbens (22) einer Berstscheibe (42) versehen ist, und einer pyrotechnischen Treibladung (28), die nach ihrer Zündung den Innenraum (24) des Kolbens (22) mit unter Druck stehendem Gas beaufschlagt,
**dadurch gekennzeichnet, daß** die Durchgangsöffnung (40) eine Stufenbohrung mit einem ersten Abschnitt (56) auf der dem Innenraum des Kolbens zugewandten Seite und einem zweiten Abschnitt (58) auf der entgegengesetzten Seite ist, der einen kleineren Durchmesser als der erste Abschnitt (56) hat, und daß die Berstscheibe (42) am Rand des ersten Abschnittes (56) der Stufenbohrung auf der Innenseite des Kolbens (22) anliegt.

2. Linearantrieb nach Anspruch 1, **dadurch gekennzeichnet, daß** die Berstscheibe (42) mit einer Bohrung (66) versehen ist.

3. Linearantrieb nach Anspruch 2, **dadurch gekennzeichnet, daß** die Bohrung (66) der Berstscheibe (42) einen Durchmesser von etwa 0,5 mm hat.

4. Linearantrieb nach einem der vorhergehenden Ansprüche, **dadurch gekennzeichnet, daß** die Berstscheibe (42) an einem Stopfen (52) angeordnet ist, der mit der Stufenbohrung (40) versehen und in eine Aufnahme in der Stirnwand (26) des Kolbens eingesetzt ist.

5. Linearantrieb nach Anspruch 4, **dadurch gekennzeichnet, daß** die Berstscheibe (42) mit dem Stopfen (52) verpreßt ist.

6. Linearantrieb nach Anspruch 5, **dadurch gekennzeichnet, daß** der Stopfen (52) auf der der Innenseite des Kolbens (22) zugewandten Seite über die Berstscheibe (42) umgebördelt ist.

7. Linearantrieb nach einem der Ansprüche 4 bis 6, **dadurch gekennzeichnet, daß** der Stopfen (52) mit der Stirnwand (26) verpreßt ist.

8. Linearantrieb nach Anspruch 7, **dadurch gekennzeichnet, daß** der Stopfen (52) die Aufnahme durchquert und auf der Außenseite des Kolbens (22) umgebördelt ist.

9. Linearantrieb nach einem der vorhergehenden Ansprüche, **dadurch gekennzeichnet, daß** der erste Abschnitt (56) der Stufenbohrung (40) einen Durchmesser von etwa 4 mm hat.

10. Linearantrieb nach einem der vorhergehenden Ansprüche, **dadurch gekennzeichnet, daß** der zweite Abschnitt (58) der Stufenbohrung (40) einen Durchmesser von etwa 3 mm hat.

11. Linearantrieb nach einem der vorhergehenden Ansprüche, **dadurch gekennzeichnet, daß** die Länge der Stufenbohrung (40) etwa 6 mm beträgt.

12. Linearantrieb nach einem der vorhergehenden Ansprüche, **dadurch gekennzeichnet, daß** die Berstscheibe (42) eine Dicke von etwa 0,2 mm hat.

13. Linearantrieb nach einem der vorhergehenden Ansprüche, **dadurch gekennzeichnet, daß** zwischen dem ersten und dem zweiten Abschnitt (56, 58) der Stufenbohrung (40) ein kegelstumpfförmiger Übergang (60) vorgesehen ist.

14. Linearantrieb nach einem der vorhergehenden Ansprüche, **dadurch gekennzeichnet, daß** der zweite Abschnitt (58) der Stufenbohrung (40) an seinem dem Außenraum zugewandten Ende kegelstumpfförmig erweitert ist.

15. Linearantrieb nach einem der Ansprüche 4 bis 8, **dadurch gekennzeichnet, daß** der Stopfen (52) aus einem Material mit einem Schmelzpunkt von etwa 140°C bis etwa 160°C besteht und die Treibladung (28) eine Selbstentzündungstemperatur von über 170°C hat.

16. Linearantrieb nach Anspruch 15, **dadurch gekennzeichnet, daß** der Stopfen (52) aus einer Zinn-Wismut-Legierung besteht.

17. Linearantrieb nach Anspruch 4, **dadurch gekennzeichnet, daß** die Berstscheibe (42) mit einem Zusatzteil verclipst ist, das am Stopfen (52) befestigt ist.

## Claims

1. A linear drive (10) for a belt tensioner, with a cylinder tube (20), a piston (22) displaceably arranged therein, which has a hollow interior (24) and an end wall (26) at one axial end, which end wall (26) is provided with a through opening (40) and with a bursting disc (42) on the side of the interior (24) of the piston (22), and with a pyrotechnic propellant charge (28) which following its ignition acts upon the interior (24) of the piston (22) with pressurised gas,
**characterised in that** the through opening (40) is a stepped bore with a first section (56) on the side facing the interior of the piston and with a second section (58) on the opposite side, which second section has a smaller diameter than the first section (56), and that the bursting disc (42) abuts at the edge of the first section (56) of the stepped bore on the inner side of the piston (22).

2. The linear drive according to claim 1, **characterised in that** the bursting disc (42) is provided with a bore (66).

3. The linear drive according to claim 2, **characterised in that** the bore (66) of the bursting disc (42) has a diameter of approximately 0.5 mm.

4. The linear drive according to any of the preceding claims, **characterised in that** the bursting disc (42) is arranged on a plug (52) which is provided with the stepped bore (40) and is inserted into a mounting in the end wall (26) of the piston.

5. The linear drive according to claim 4, **characterised in that** the bursting disc (42) is pressed with the plug (52).

6. The linear drive according to claim 5, **characterised in that** the plug (52) is beaded over the bursting disc (42) on the side facing the inner side of the piston (22).

7. The linear drive according to any of claims 4 to 6, **characterised in that** the plug (52) is pressed with the end wall (26).

8. The linear drive according to claim 7, **characterised in that** the plug (52) passes through the mounting and is beaded on the outer side of the piston (22).

9. The linear drive according to any of the preceding claims, **characterised in that** the first section (56) of the stepped bore (40) has a diameter of approximately 4 mm.

10. The linear drive according to any of the preceding claims, **characterised in that** the second section (58) of the stepped bore (40) has a diameter of approximately 3 mm.

11. The linear drive according to any of the preceding claims, **characterised in that** the length of the stepped bore (40) amounts to approximately 6 mm.

12. The linear drive according to any of the preceding claims, **characterised in that** the bursting disc (42) has a thickness of approximately 0.2 mm.

13. The linear drive according to any of the preceding claims, **characterised in that** a transition (60) in the form of a truncated cone is provided between the first and the second sections (56, 58) of the stepped bore (40).

14. The linear drive according to any of the preceding claims, **characterised in that** the second section (58) of the stepped bore (40) is widened in the form of a truncated cone at its end facing the exterior.

15. The linear drive according to any of claims 4 to 8, **characterised in that** the plug (52) consists of a material with a melting point of approximately 140°C to approximately 160°C and the propellant charge (28) has a spontaneous ignition temperature of more than 170°C.

16. The linear drive according to claim 15, **characterised in that** the plug (52) consists of a tin/bismuth alloy.

17. The linear drive according to claim 4, **characterised in that** the bursting disc (42) is clipped to an additional component which is fastened to the plug (52).

## Revendications

1. Mécanisme d'entraînement linéaire (10) pour un tendeur de ceinture, comprenant un tube cylindrique (20), un piston (22) agencé à déplacement dans celui-ci, qui présente un espace intérieur (24) creux et, à une extrémité axiale, une paroi frontale (26) qui est pourvue d'une ouverture de passage (40) et d'une plaque de rupture (42) sur le côté de l'espace intérieur (24) du piston (22), et d'une charge propulsive (28) pyrotechnique qui, après son allumage, alimente l'espace intérieur (24) du piston (22) avec du gaz sous pression,
**caractérisé en ce que** l'ouverture de passage (40) est un perçage étagé avec une première partie (56) sur le côté tourné vers l'espace intérieur du piston et une deuxième partie (58) sur le côté opposé, qui a un diamètre plus petit que la première partie (58) du perçage étagé, et **en ce que** la plaque de rupture (42) est en appui sur le bord de la première partie (56) du perçage étagé, sur la face intérieure du piston (22).

2. Mécanisme d'entraînement linéaire selon la revendication 1, **caractérisé en ce que** la plaque de rupture (42) est pourvue d'un perçage (66).

3. Mécanisme d'entraînement linéaire selon la revendication 2, **caractérisé en ce que** le perçage (66) de la plaque de rupture (42) a un diamètre d'environ 0,5 mm.

4. Mécanisme d'entraînement linéaire selon l'une quelconque des revendications précédentes, **caractérisé en ce que** la plaque de rupture (42) est agencée sur un bouchon (52) qui est pourvu du perçage étagé (40) et qui est mis en place dans un logement dans la paroi frontale (26) du piston.

5. Mécanisme d'entraînement linéaire selon la revendication 4, **caractérisé en ce que** la plaque de rupture (42) est pressée avec le bouchon (52).

6. Mécanisme d'entraînement linéaire selon la revendication 5, **caractérisé en ce que** le bouchon (52) est rabattu sur la plaque de rupture (42) sur le côté tourné vers la face intérieure du piston (22).

7. Mécanisme d'entraînement linéaire selon l'une quelconque des revendications 4 à 6, **caractérisé en ce que** le bouchon (52) est pressé avec la paroi frontale (26).

8. Mécanisme d'entraînement linéaire selon la revendication 7, **caractérisé en ce que** le bouchon (52) traverse le logement et est rabattu sur la face extérieure du piston (22).

9. Mécanisme d'entraînement linéaire selon l'une quelconque des revendications précédentes, **caractérisé en ce que** la première partie (56) du perçage étagé (40) a un diamètre d'environ 4 mm.

10. Mécanisme d'entraînement linéaire selon l'une quelconque des revendications précédentes, **caractérisé en ce que** la deuxième partie (58) du perçage étagé (40) a un diamètre d'environ 3 mm.

11. Mécanisme d'entraînement linéaire selon l'une quelconque des revendications précédentes, **caractérisé en ce que** la longueur du perçage étagé (40) est d'environ 6 mm.

12. Mécanisme d'entraînement linéaire selon l'une quelconque des revendications précédentes, **caractérisé en ce que** la plaque de rupture (42) a une épaisseur d'environ 0,2 mm.

13. Mécanisme d'entraînement linéaire selon l'une quelconque des revendications précédentes, **caractérisé en ce qu'**il est prévu une transition (60) de forme tronconique entre la première et la deuxième partie (56, 58) du perçage étagé (40).

14. Mécanisme d'entraînement linéaire selon l'une quelconque des revendications précédentes, **caractérisé en ce que** la deuxième partie (58) du perçage étagé (40) est évasé de forme tronconique à son extrémité tournée vers l'espace extérieur.

15. Mécanisme d'entraînement linéaire selon l'une quelconque des revendications 4 à 8, **caractérisé en ce que** le bouchon (52) est réalisé en un matériau avec un point de fusion d'environ 140°C à environ 160°C, et **en ce que** la charge propulsive (28) a une température d'auto-allumage de plus de 170°C.

16. Mécanisme d'entraînement linéaire selon la revendication 15, **caractérisé en ce que** le bouchon (52) est en un alliage étain/bismuth.

17. Mécanisme d'entraînement linéaire selon la revendication 4, **caractérisé en ce que** la plaque de rupture (42) est agrafée avec une pièce additionnelle qui est fixée sur le bouchon (52).
